# EUROPÄISCHE PATENTSCHRIFT

(11) **EP 2 066 878 B1**
(45) Veröffentlichungstag und Bekanntmachung des Hinweises auf die Patenterteilung: **02.05.2012**
(21) Anmeldenummer: 07787968.2
(22) Anmeldetag: 27.07.2007
(51) Int. Cl.: F01N 3/021, F01N 3/022

(54) **FILTERELEMENT, INSBESONDERE ZUR FILTERUNG VON ABGASEN EINER BRENNKRAFTMASCHINE**
FILTER ELEMENT, IN PARTICULAR FOR FILTERING EXHAUST GASES OF AN INTERNAL COMBUSTION ENGINE
ÉLÉMENT FILTRANT, NOTAMMENT POUR FILTRER LES GAZ D'ÉCHAPPEMENT D'UN MOTEUR À COMBUSTION INTERNE

(30) Priorität: 18.09.2006 DE 102006043706
(43) Veröffentlichungstag der Anmeldung: 10.06.2009
(73) Patentinhaber: Robert Bosch GmbH, 70442 Stuttgart (DE)
(72) Erfinder: MUELLER, Rainer, 70372 Stuttgart (DE); KOMORI, Teruo, 70378 Stuttgart (DE); THUENER, Lars, 70176 Stuttgart (DE)
(86) Internationale Anmeldenummer: PCT/EP2007/057751
(87) Internationale Veröffentlichungsnummer: WO 2008/034664

(56) Entgegenhaltungen:
- EP-A- 1 736 459
- EP-A1- 1 153 643
- EP-A1- 1 283 067
- JP-A- 50 114 409
- US-A- 5 063 029
- US-A1- 2004 142 145

## Beschreibung

### Stand der Technik

Die Erfindung betrifft ein Filterelement, insbesondere zur Filterung von Abgasen einer Brennkraftmaschine, nach dem Oberbegriff des Anspruchs 1, sowie einen Partikelfilter und eine Abgasreinigungsanlage mit einem Filterelement. Die Erfindung betrifft ferner ein Verfahren zur Herstellung eines Filterelements.

Diese Filterelemente können durch Extrudieren hergestellt werden wie bekannt aus EP 1283067A1. Hierbei kann ein keramisches Material durch ein Extrusionswerkzeug gedrückt werden, so dass ein prismatischer Körper mit einer Vielzahl von parallel zueinander angeordneten Strömungskanälen entsteht. An den Extrusionsvorgang schließt sich ein Brenn- oder Sintervorgang an.

Bei den bekannten Filterelementen können sowohl Cordierit als auch Siliziumcarbid zum Einsatz kommen. Ein wesentlicher Unterschied zwischen diesen beiden Materialien liegt darin, dass die Wärmeausdehnung von Cordierit wesentlich niedriger ist als die Wärmeausdehnung von Siliziumcarbid. Aus diesem Grund werden aus Siliziumcarbid hergestellte Filterelemente nicht "in einen Guss", also als Monolith, gefertigt, sondern aus mehreren Filtersegmenten zusammengesetzt. Jedes Filterelement umfasst eine Teilmenge von zueinander parallelen Strömungskanälen. Diese Filtersegmente bilden Teilstücke ("bricks"), die einzeln hergestellt und dann mit einem keramischen Klebemittel zu einem Filterelement zusammengesetzt werden.

### Offenbarung der Erfindung

Aufgabe der vorliegenden Erfindung ist es, ein Filterelement zu schaffen, das möglichst einfach herstellbar ist.

Die der Erfindung zugrundeliegende Aufgabe wird bei einem eingangs genannten Filterelement dadurch gelöst, dass die Filtersegmente einen Abstand zueinander aufweisen und über einstückig mit den Filtersegmenten ausgebildete Verbindungsmittel miteinander verbunden sind.

### Vorteilhafte Wirkungen

Das aus EP1283067A1 bekannte Filterelement kann im Rahmen nur eines Extrusionsvorgangs hergestellt werden, ohne dass die einzelnen Filtersegmente nachträglich über separate Verbindungsmittel, beispielsweise einem Kleber, miteinander verbunden werden müssten. Dadurch, dass die Filtersegmente zueinander beabstandet sind, wird ein Raum geschaffen, der es einem Filtersegment während eines Brenn- oder Sintervorgangs ermöglicht, sich auszudehnen, ohne sich selbst dabei hohen Eigenspannungen auszusetzen beziehungsweise ohne dabei ein benachbartes Filtersegment einer hohen Druckspannung auszusetzen.

Dadurch, dass das Filterelement in nur einem Extrusionsvorgang hergestellt werden kann, muss auch nur ein entsprechendes Extrusionswerkzeug bereitgestellt werden. Bei den meisten bekannten Filterelementen hingegen müssen entweder für die jeweiligen Filtersegmente spezifische Werkzeuge bereitgestellt werden, oder es müssen im Querschnitt zunächst identische Filtersegmente, nachdem sie miteinander verklebt werden, durch Schleifen in ihrer Kontur angepasst werden. Dies geht mit einem hohen Materialverlust einher, der bei dem erfindungsgemäßen Filterelement vermieden werden kann.

Zwar ist die Geometrie des Filterelements besonders bei Filterelementen vorteilhaft, die zumindest anteilig aus Siliziumcarbid gebildet sind. Dennoch liegt es im Rahmen dieser Erfindung, dass die Filtersegmente auch zumindest anteilig aus Cordierit oder auch einem anderen Material gebildet sein können.

Die Filtersegmente können sich zu einem insgesamt zylindrischen Filterelement ergänzen. Der Durchmesser dieses Filterelements kann beispielsweise zwischen 10 und 18 cm, insbesondere 5,66 Zoll betragen. Die Filtersegmente können im Querschnitt beispielsweise zwischen 400 und 1.600 Quadratmillimeter groß sein.

Das Filterelement weist mindestens zwei Filtersegmente auf, vorzugsweise jedoch mindestens vier Filtersegmente. Dabei sind jeweils zwischen zueinander benachbarten Filtersegmenten Zwischenräume ausgebildet, in die sich während der Herstellung des Filterelements oder bei dessen Betrieb erwärniende Filtersegmente ausdehnen können.

Die Filtersegmente weisen einen Querschnitt auf, der zumindest so groß ist, dass eine Anzahl von zueinander parallelen Strömungskanälen aufgenommen werden können. Zumindest für ein zentral angeordnetes Filtersegment können jedoch quadratische oder kreisförmige Querschnitte vorteilhaft sein, um eine insgesamt gleichmäßige Verteilung von Filtersegmenten über den Querschnitt des Filterelements zu ermöglichen.

Der Abstand zwischen den Filtersegmenten kann im Vergleich zu der Größe des Querschnitts eines Filtersegments vergleichsweise klein sein, beispielsweise zwischen 0,5 und 10 mm, insbesondere zwischen 1 und 5 mm betragen. Der Abstand soll einen genügend großen Ausdehnungsraum für die Filtersegmente bereitstellen, jedoch andererseits nicht unnötig groß bemessen sein, um die insgesamt zur Verfügung stehende Filterfläche nicht zu stark zu verkleinern.

Erfindungsgemäß sind zueinander benachbarte Filtersegmente über mehrere Verbindungsmittel miteinander verbunden. In vorteilhafter Weise ist ein Verbindungsmittel als Steg ausgebildet, der sich parallel zu den Strömungskanälen erstreckt. Ein solcher Steg weist eine Breite auf, der dem Abstand zwischen zueinander benachbarten Filtersegmenten entspricht. Die hierzu quer anliegende Materialstärke kann zwischen 0,5 und 10 mm betragen. Es ist jedoch vorteilhaft, wenn die Materialstärke des Stegs geringer ist als die Wandstärke einer einen Strömungskanal begrenzenden Filterwand eines Filtersegments.

Um die während einer Erwärmung des Filterelements auftretenden Spannungen weiter zu reduzieren, wird vorgeschlagen, dass der Steg in einem mittleren Bereich eine geringere Materialstärke aufweist als in den äußeren, zu den Filtersegmenten direkt benachbarten Bereichen. Hierdurch kann sich der Steg in seinem mittleren Bereich in einem begrenzten Maß verformen, ohne dass dabei zulässige Grenzspannungen überschritten werden. Um einen guten Schutz der Filtersegmente vor mechanischen Überlastungen zu schaffen, wird vorgeschlagen, dass die Biegebruchfestigkeit des Stegs insbesondere in seinem mittleren Bereich maximal 60% der Biegebruchfestigkeit eines Filtersegments beträgt.

Eine besonders vorteilhafte Ausführungsform der Erfindung sieht vor, dass der durch den Abstand zwischen zwei miteinander verbundenen Filtersegmenten entstehende Zwischenraum zumindest abschnittsweise mit einem Füllmaterial aufgefüllt ist. Mit dem Füllmaterial kann die mechanische Stabilität der miteinander verbundenen Filtersegmente und damit des Filterelements erhöht werden. Als Füllmaterial können beispielsweise keramische Pulver, anorganische Binder und/oder keramische Fasern eingesetzt werden. Das Füllmaterial muss den zwischen den Filtersegmenten gebildeten Zwischenraum in zu den Strömungskanälen paralleler Richtung nicht vollständig ausfüllen. Bevorzugt ist jedoch, wenn mindestens 20 % der Länge der Strömungskanal aufgefüllt ist.

Weitere Vorteile und vorteilhafte Ausgestaltungen der Erfindung sind der nachfolgenden Zeichnung, deren Beschreibung und den Patentansprüchen entnehmbar. Alle in der Zeichnung, deren Beschreibung und den Patentansprüchen beschriebenen Merkmale können sowohl einzeln als auch in beliebiger Kombination miteinander erfindungswesentlich sein.

### Kurze Beschreibung der Zeichnungen

Es zeigen:
- Figur 1: eine schematische Darstellung einer Brennkraftmaschine mit einer Abgasreinigungsanlage und mit einem Filterelement;
- Figur 2: einen Längsschnitt eines herkömmlichen Filterelements;
- Figur 3: einen Querschnitt eines erfindungsgemäßen Filterelements mit über Stege verbundenen Filtersegmenten entsprechend einer ersten Ausführungsform;
- Figur 4: einen Querschnitt eines vergrößert dargestellten Stegs;
- Figur 5: einen Querschnitt des Filterelements gemäß Figur 3 mit aufgefüllten Zwischenräumen;
- Figur 6: einen Längsschnitt des Filterelements gemäß Figur 5 und
- Figur 7: einen Querschnitt eines erfindungsgemäßen Filterelements entsprechend einer zweiten Ausführungsform.

### Ausführungsformen der Erfindung

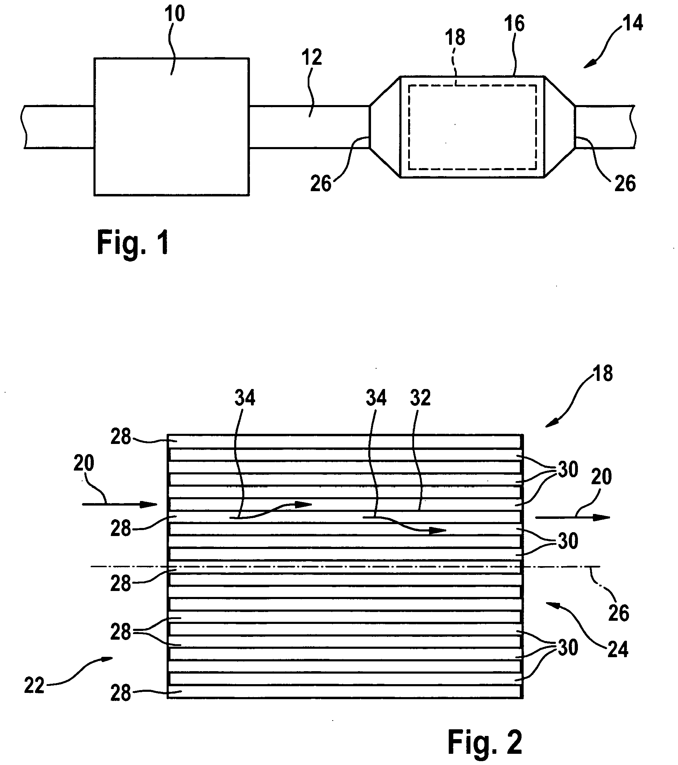

In Figur 1 trägt eine Brennkraftmaschine das Bezugszeichen 10. Die Abgase werden über ein Abgasrohr 12 einer Abgasreinigungsanlage 14 zugeleitet. Diese umfasst einen Partikelfilter 16, mit dem Rußpartikel aus dem im Abgasrohr 12 strömenden Abgas herausgefiltert werden. Dies ist insbesondere bei Diesel-Brennkraftmaschinen erforderlich, um gesetzliche Bestimmungen einzuhalten.

Der Partikelfilter 16 umfasst ein insgesamt im Wesentlichen zylindrisches Filterelement 18.

In Figur 2 ist ein aus dem Stand der Technik bekanntes Filterelement 18 in einem Längsschnitt dargestellt. Dieses wird in Richtung der Pfeile 20 von Abgas der Brennkraftmaschine 10 durchströmt. Eine Eintrittsfläche für das zu filternde Abgas trägt in Figur 2 das Bezugszeichen 22, eine Austrittsfläche für gefiltertes Abgas das Bezugszeichen 24.

Parallel zu einer Längsachse 26 des Filterelements 18 verlaufen mehrere Strömungskanäle 28 und 30. Die Strömungskanäle 28 sind an der Eintrittsfläche 22 offen und an der Austrittsfläche 24 geschlossen. Im Gegensatz dazu sind die Strömungskanäle 30 an der Austrittsfläche 24 offen und im Bereich der Eintrittsfläche 22 geschlossen.

Der Strömungsweg des ungereinigten Abgases führt also in einen der Strömungskanäle 28 und von dort über eine Filterwand 32 in einen der Strömungskanäle 30. Exemplarisch ist dies durch Pfeile 34 dargestellt.

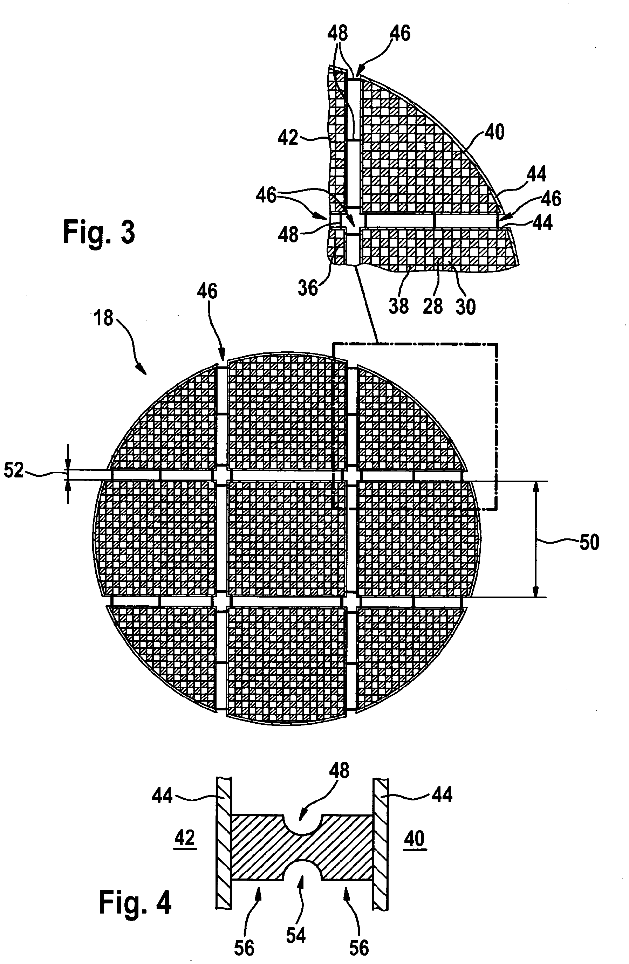

In Figur 3 ist ein erfindungsgemäßes Filterelement insgesamt mit dem Bezugszeichen 18 bezeichnet. Dieses weist insgesamt Filtersegmente auf, von denen in Figur 3 vier Filtersegmente mit den Bezugszeichen 36 bis 42 bezeichnet sind. Diese Filtersegmente sind von Segmentgrenzen 44 begrenzt. Die Segmentgrenzen zueinander benachbarter Filtersegmente, beispielsweise der Filtersegmente 38 und 40, sind zueinander beabstandet, so dass in diesem Bereich ein Zwischenraum 46 ausgebildet ist. Dieser Zwischenraum 46 wird überbrückt von stegförmigen Verbindungsmitteln 48, die die Filtersegmente miteinander verbinden.

Bei der in Figur 3 dargestellten Ausführungsfom ist das zentral angeordnete Filtersegment 36 im Querschnitt quadratisch. Dieses Filtersegment weist vorzugsweise einen Querschnitt einer Größe von 400 bis 1.600 Quadratmillimeter auf. Die einzelnen Filtersegmente weisen zueinander einen Abstand 52 von beispielsweise 0,5 bis 10 mm auf.

In Figur 4 ist ein stegförmiges Verbindungsmittel 48 und seine Verbindung zu den Segmentgrenzen 44 zueinander benachbarter Filtersegmente 40 und 42 detaillierter dargestellt. Das Verbindungsmittel 48 weist einen mittleren Bereich 54 auf, der eine niedrigere Materialstärke aufweist als die sich seitlich anschließenden, äußeren Bereiche 56, die direkt benachbart zu den Segmentgrenzen 44 angeordnet sind. In dem in Figur 4 dargestellten Ausführungsbeispiel wird die geringere Materialstärke in dem mittleren Bereich 54 durch einander gegenüberliegende rinnenförmige Auskerbungen erzeugt.

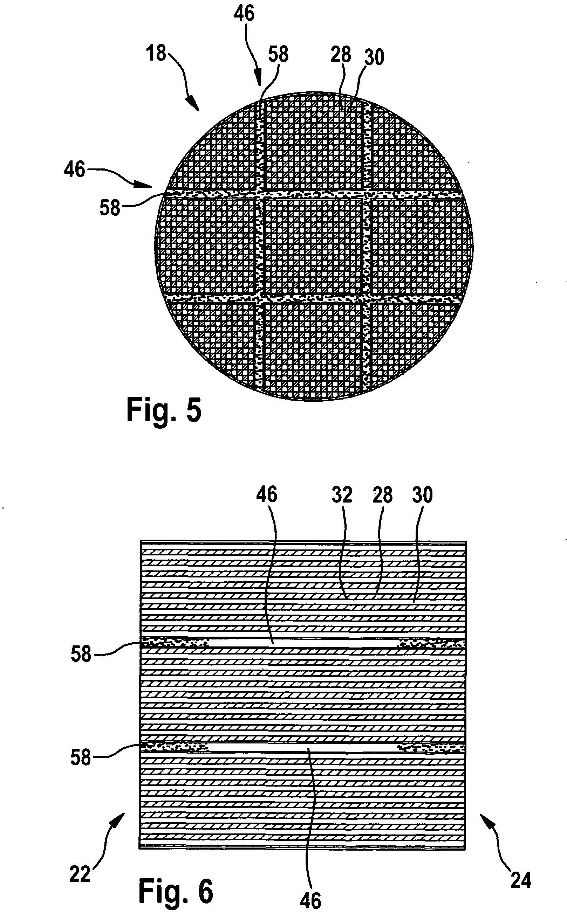

Das Filterelement 18 ist in Figur 5 mit mit einem Füllmaterial 58 aufgefüllten Zwischenräumen 46 dargestellt. Mit Bezug auf Figur 6 erstreckt sich das Füllmaterial 58 nicht entlang der gesamten Länge eines Strömungskanals 28 oder 30, sondern lediglich jeweils in einem zu der Eintrittsfläche 22 beziehungsweise der Austrittsfläche 24 benachbarten Bereich.

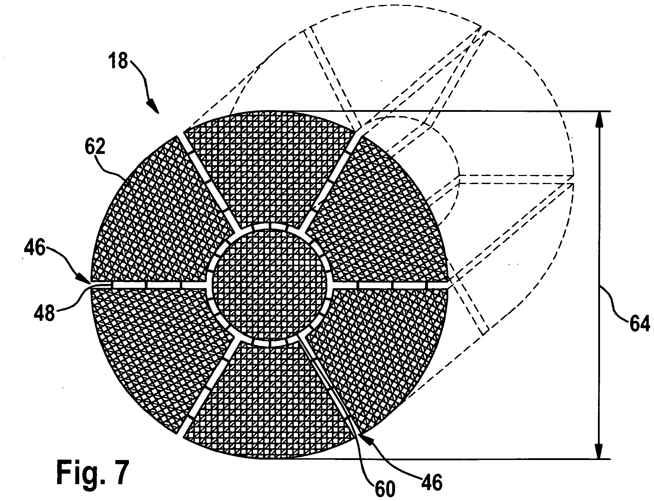

Figur 7 zeigt eine weitere Ausführungsform eines erfindungsgemäßen Filterelements 18. Bei diesem Filterelement ist ein zentral angeordnetes, im Querschnitt kreisförmiges Filtersegment 60 vorgesehen, das von mehreren Filtersegmenten 62 umgeben ist. Die Filtersegmente 62 setzen sich kreissegmentförmig zusammen und bilden einen das zentrale Filtersegment 60 umgebenden Ring. Jeweils zwei der einzelnen Filtersegmente 60, 62 wiederum sind über einstückig mit den Filtersegmenten ausgebildeten Verbindungsmitteln 48 miteinander verbunden.

Der Durchmesser 64 dieses Filterelements 18 kann beispielsweise 5,66 Zoll betragen.

## Patentansprüche

1. Filterelement (18), insbesondere zur Filterung von Abgasen einer Brennkraftmaschine (10), mit zueinander parallelen Strömungskanälen, wobei mindestens zwei Filtersegmente (36 - 42, 60 - 62) vorgesehen sind, die jeweils eine Teilmenge von Strömungskanälen (28, 30) aufweisen, wobei die Filtersegmente (36 - 42, 60 - 62) einen Abstand (52) zueinander aufweisen und über einstückig mit den Filtersegmenten (36 - 42, 60 - 62) ausgebildete Verbindungsmittel (48) miteinander verbunden sind, **dadurch gekennzeichnet, daß** zwischen zueinander benachbarten Filtersegmenten (36 - 42, 60 - 62) mehrere Verbindungsmittel (48) vorgesehen sind.

2. Filterelement (18) nach Anspruch 1, **dadurch gekennzeichnet, dass** die Filtersegmente (36 - 42, 60 - 62) zumindest anteilig aus Siliziumcarbid gebildet sind.

3. Filterelement (18) nach Anspruch 1 oder 2, **dadurch gekennzeichnet, dass** die Filtersegmente (36 - 42, 60 - 62) zumindest anteilig aus Cordierit gebildet sind.

4. Filterelement (18) nach mindestens einem der vorhergehenden Ansprüche, **dadurch gekennzeichnet, dass** sich die Filtersegmente (36 - 42, 60 - 62) zu einem insgesamt zylindrischen Filterelement (18) ergänzen.

5. Filterelement (18) nach mindestens einem der vorhergehenden Ansprüche, **dadurch gekennzeichnet, dass** die Filtersegmente (36 - 42, 60 - 62) im Querschnitt zwischen 400 und 1600 Quadratmillimeter groß sind.

6. Filterelement (18) nach mindestens einem der vorhergehenden Ansprüche, **dadurch gekennzeichnet, dass** das Filterelement (18) mindestens vier Filtersegmente (36 - 42, 60 - 62) aufweist.

7. Filterelement (18) nach mindestens einem der vorhergehenden Ansprüche, **dadurch gekennzeichnet, dass** zumindest ein zentral angeordnetes Filtersegment (36) im Querschnitt quadratisch ist.

8. Filterelement (18) nach mindestens einem der Ansprüche 1 bis 6, **dadurch gekennzeichnet, dass** zumindest ein zentral angeordnetes Filtersegment (60) im Querschnitt kreisförmig ist.

9. Filterelement (18) nach mindestens einem der vorhergehenden Ansprüche, **dadurch gekennzeichnet, dass** zumindest entlang des Umfangs des Filterelements (18) angeordnete Filtersegmente (62) zumindest abschnittsweise kreissegmentförmig sind.

10. Filterelement (18) nach mindestens einem der vorhergehenden Ansprüche, **dadurch gekennzeichnet, dass** die Zelldichte der Strömungskanäle (28, 30) zwischen 80 und 350 cpsi (channels per square inch) beträgt.

11. Filterelement (18) nach mindestens einem der vorhergehenden Ansprüche, **dadurch gekennzeichnet, dass** der Abstand (52) zwischen zueinander benachbarten Filtersegmenten (36 - 42, 60 - 62) zwischen 0,5 und 10 mm, insbesondere zwischen 1 und 5 mm beträgt.

12. Filterelement (18) nach mindestens einem der vorhergehenden Ansprüche, **dadurch gekennzeichnet, dass** die Verbindungsmittel (48) als Steg ausgebildet sind, der sich parallel zu den Strömungskanälen (28, 30) erstreckt.

13. Filterelement (18) nach Anspruch 12, **dadurch gekennzeichnet, dass** der Steg eine Materialstärke zwischen 0,5 und 10 mm aufweist.

14. Filterelement (18) nach Anspruch 12 oder 13, **dadurch gekennzeichnet, dass** die Materialstärke des Stegs geringer ist als die Wandstärke einer einen Strömungskanal (28, 30) begrenzenden Filterwand (32) eines Filtersegments.

15. Filterelement (18) nach mindestens einem der Ansprüche 12 bis 14, **dadurch gekennzeichnet, dass** der Steg in einem mittleren Bereich (54) eine geringere Materialstärke aufweist als in den äußeren, zu den Filtersegmenten (36 - 42, 60 - 62) direkt benachbarten Bereichen (56).

16. Filterelement (18) nach mindestens einem der Ansprüche 12 bis 15, **dadurch gekennzeichnet, dass** die Biegebruchfestigkeit des Stegs insbesondere in seinem mittleren Bereich (54) maximal 60% der Biegebruchfestigkeit eines Filtersegments (36 - 42, 60 - 62) beträgt.

17. Filterelement (18) nach mindestens einem der vorhergehenden Ansprüche, **dadurch gekennzeichnet, dass** der durch den Abstand (52) zwischen zwei miteinander verbundenen Filtersegmenten (36 - 42, 60 - 62) entstehende Zwischenraum (46) zumindest abschnittsweise mit einem Füllmaterial (58) aufgefüllt ist.

18. Filterelement (18) nach Anspruch 17, **dadurch gekennzeichnet, dass** der Zwischenraum (46) in zu den Strömungskanälen (28, 30) paralleler Richtung zumindest zu 20% der Länge der Strömungskanäle (28, 30) aufgefüllt ist.

19. Filterelement (18) nach Anspruch 17 oder 18, **dadurch gekennzeichnet, dass** das Füllmaterial (58) mindestens einen der folgenden Bestandteile aufweist: keramische Pulver, insbesondere Siliziumdioxid, Aluminiumoxid; anorganische Binder, insbesondere Siliziumdioxid-Sol, Aluminiumoxid-Sol, keramische Fasern, insbesondere Mullit-Fasern, Aluminiumoxid-Fasern.

20. Partikelfilter (16) mit einem Filterelement (18) nach mindestens einem der vorhergehenden Ansprüche.

21. Abgasreinigungsanlage (14), insbesondere mit einem Partikelfilter (16), mit einem Filterelement (18) nach mindestens einem der Ansprüche 1 bis 19.

22. Verfahren zur Herstellung eines Filterelements (18), nach mindestens einem der Ansprüche 1 bis 19, wobei verschiedene Filtersegmente (36 - 42, 60 - 62), die jeweils mindestens eine Teilmenge von Strömungskanälen (28, 30) des Filterelements (18) aufweisen, über ein Verbindungsmittel (48) miteinander verbunden werden, **dadurch gekennzeichnet, dass** die Filtersegmente (36 - 42, 60 - 62) und das Verbindungsmittel (48) miteinander einstückig extrudiert werden.

## Claims

1. Filter element (18), in particular for filtering exhaust gases of an internal combustion engine (10), having two mutually parallel flow ducts, wherein at least two filter segments (36 - 42, 60 - 62) are provided which have in each case a partial quantity of flow ducts (28, 30), wherein the filter segments (36 - 42, 60 - 62) have a spacing (52) to one another and are connected to one another via connecting means (48) formed in one piece with the filter segments (36 - 42, 60 - 62), **characterized in that** multiple connecting means (48) are provided between mutually adjacent filter segments (36 - 42, 60 - 62).

2. Filter element (18) according to Claim 1, **characterized in that** the filter segments (36 - 42, 60 - 62) are formed at least in part from silicon carbide.

3. Filter element (18) according to Claim 1 or 2, **characterized in that** the filter segments (36 - 42, 60 - 62) are formed at least in part from cordierite.

4. Filter element (18) according to at least one of the preceding claims, **characterized in that** the filter segments (36 - 42, 60 - 62) combine to form an altogether cylindrical filter element (18).

5. Filter element (18) according to at least one of the preceding claims, **characterized in that** the filter segments (36 - 42, 60 - 62) are between 400 and 1600 square millimetres in size in cross section.

6. Filter element (18) according to at least one of the preceding claims, **characterized in that** the filter element (18) has at least four filter segments (36 - 42, 60 - 62).

7. Filter element (18) according to at least one of the preceding claims, **characterized in that** at least one centrally arranged filter segment (36) is square in cross section.

8. Filter element (18) according to at least one of Claims 1 to 6, **characterized in that** at least one centrally arranged filter segment (60) is circular in cross section.

9. Filter element (18) according to at least one of the preceding claims, **characterized in that** at least filter segments (62) arranged along the circumference of the filter element (18) are, at least in portions, of circular segment shape.

10. Filter element (18) according to at least one of the preceding claims, **characterized in that** the cell density of the flow ducts (28, 30) is between 80 and 350 cpsi (channels per square inch).

11. Filter element (18) according to at least one of the preceding claims, **characterized in that** the spacing (52) between mutually adjacent filter segments (36 - 42, 60 - 62) is between 0.5 and 10 mm, in particular between 1 and 5 mm.

12. Filter element (18) according to at least one of the preceding claims, **characterized in that** the connecting means (48) are formed as a web which extends parallel to the flow ducts (28, 30).

13. Filter element (18) according to Claim 12, **characterized in that** the web has a material thickness of between 0.5 and 10 mm.

14. Filter element (18) according to Claim 12 or 13, **characterized in that** the material thickness of the web is smaller than the wall thickness of a filter wall (32), which delimits a flow duct (28, 30), of a filter segment.

15. Filter element (18) according to at least one of Claims 12 to 14, **characterized in that** the web has a smaller material thickness in a central region (54) than in the outer regions (56) directly adjacent to the filter segments (36 - 42, 60 - 62).

16. Filter element (18) according to at least one of Claims 12 to 15, **characterized in that** the flexural strength of the web in particular in its central region (54) is at most 60% of the flexural strength of a filter segment (36 - 42, 60 - 62).

17. Filter element (18) according to at least one of the preceding claims, **characterized in that** the intermediate space (46) generated by the spacing (52) between two filter segments (36 - 42, 60 - 62) connected to one another is filled at least in portions with a filler material (58).

18. Filter element (18) according to Claim 17, **characterized in that** the intermediate space (46) is filled over at least 20% of the length of the flow ducts (28, 30) in the direction parallel to the flow ducts (28, 30).

19. Filter element (18) according to Claim 17 or 18, **characterized in that** the filler material (18) has at least one of the following constituents: ceramic powder, in particular silicon dioxide, aluminium oxide; inorganic binding agent, in particular silicon dioxide sol, aluminium oxide sol, ceramic fibres, in particular mullite fibres, aluminium oxide fibres.

20. Particle filter (16) having a filter element (18) according to at least one of the preceding claims.

21. Exhaust-gas purification system (14), in particular having a particle filter (16), having a filter element (18) according to at least one of Claims 1 to 19.

22. Method for producing a filter element (18) according to at least one of Claims 1 to 19, wherein different filter segments (36 - 42, 60 - 62) which have in each case at least a partial quantity of flow ducts (28, 30) of the filter element (18) are connected to one another via a connecting means (48), **characterized in that** the filter segments (36 - 42, 60 - 62) and the connecting means (48) are extruded in one piece with one another.

## Revendications

1. Elément filtrant (18), en particulier pour filtrer les gaz d'échappement d'un moteur à combustion interne (10), comprenant des canaux d'écoulement parallèles les uns aux autres, au moins deux segments filtrants (36-42, 60-62) étant prévus, lesquels présentent chacun une quantité partielle de canaux d'écoulement (28, 30), les segments filtrants (36-42, 60-62) présentant un espacement (52) les uns des autres, et étant reliés les uns aux autres par le biais d'un moyen de liaison (48) réalisé d'une seule pièce avec les segments filtrants (36-42, 60-62), **caractérisé en ce que** plusieurs moyens de liaison (48) sont prévus entre des segments filtrants adjacents les uns aux autres (36-42, 60-62).

2. Elément filtrant (18) selon la revendication 1, **caractérisé en ce que** les segments filtrants (36-42, 60-62) sont formés au moins dans une certaine proportion à partir de carbure de silicium.

3. Elément filtrant (18) selon la revendication 1 ou 2, **caractérisé en ce que** les segments filtrants (36-42, 60-62) sont formés au moins dans une certaine proportion à partir de cordiérite.

4. Elément filtrant (18) selon au moins l'une quelconque des revendications précédentes, **caractérisé en ce que** les segments filtrants (36-42, 60-62) se complètent mutuellement pour former un élément filtrant cylindrique (18).

5. Elément filtrant (18) selon au moins l'une quelconque des revendications précédentes, **caractérisé en ce que** les segments filtrants (36-42, 60-62) ont une dimension comprise entre 400 et 1600 mm² en section transversale.

6. Elément filtrant (18) selon au moins l'une quelconque des revendications précédentes, **caractérisé en ce que** l'élément filtrant (18) présente au moins quatre segments filtrants (36-42, 60-62).

7. Elément filtrant (18) selon au moins l'une quelconque des revendications précédentes, **caractérisé en ce qu'**au moins un segment filtrant disposé centralement (36) a une section transversale parallélépipédique.

8. Elément filtrant (18) selon au moins l'une quelconque des revendications 1 à 6, **caractérisé en ce qu'**au moins un segment filtrant disposé centralement (60) a une section transversale circulaire.

9. Elément filtrant (18) selon au moins l'une quelconque des revendications précédentes, **caractérisé en ce que** des segments filtrants (62) disposés au moins le long de la périphérie de l'élément filtrant (18) ont une forme au moins en partie en segment de cercle.

10. Elément filtrant (18) selon au moins l'une quelconque des revendications précédentes, **caractérisé en ce que** la densité cellulaire des canaux d'écoulement (28, 30) est comprise entre 80 et 350 cpsi (canaux par pouce carré).

11. Elément filtrant (18) selon au moins l'une quelconque des revendications précédentes, **caractérisé en ce que** la distance (52) entre des segments filtrants adjacents les uns aux autres (36-42, 60-62) est comprise entre 0,5 et 10 mm, notamment entre 1 et 5 mm.

12. Elément filtrant (18) selon au moins l'une quelconque des revendications précédentes, **caractérisé en ce que** les moyens de liaison (48) sont réalisés sous forme de nervure, qui s'étend parallèlement aux canaux d'écoulement (28, 30).

13. Elément filtrant (18) selon la revendication 12, **caractérisé en ce que** la nervure présente une épaisseur de matériau comprise entre 0,5 et 10 mm.

14. Elément filtrant (18) selon la revendication 12 ou 13, **caractérisé en ce que** l'épaisseur de matériau de la nervure est inférieure à l'épaisseur de la paroi d'une paroi de filtre (32) d'un segment filtrant limitant un canal d'écoulement (28, 30).

15. Elément filtrant (18) selon au moins l'une quelconque des revendications 12 à 14, **caractérisé en ce que** la nervure présente dans une région centrale (54) une plus faible épaisseur de matériau que dans les régions extérieures (56) directement adjacentes aux segments filtrants (36-42, 60-62).

16. Elément filtrant (18) selon au moins l'une quelconque des revendications 12 à 15, **caractérisé en ce que** la résistance à la flexion de la nervure, notamment dans sa région centrale (54), vaut au maximum 60 % de la résistance à la flexion d'un segment filtrant (36-42, 60-62).

17. Elément filtrant (18) selon au moins l'une quelconque des revendications précédentes, **caractérisé en ce que** l'espace intermédiaire (46) réalisé par l'espacement (52) entre deux segments filtrants (36-42, 60-62) connectés l'un à l'autre est au moins partiellement rempli d'un matériau de remplissage (58).

18. Elément filtrant (18) selon la revendication 17, **caractérisé en ce que** l'espace intermédiaire (46) dans la direction parallèle aux canaux d'écoulement (28, 30) est rempli à au moins 20 % de la longueur des canaux d'écoulement (28, 30).

19. Elément filtrant (18) selon la revendication 17 ou 18, **caractérisé en ce que** le matériau de remplissage (58) présente au moins l'un des constituants suivants : poudres céramiques, en particulier dioxyde de silicium, oxyde d'aluminium ; liants organiques, en particulier sol de dioxyde de silicium, sol d'oxyde d'aluminium, fibres céramiques, en particulier fibres de mullite, fibres d'oxyde d'aluminium.

20. Filtre à particules (16) comprenant un élément filtrant (18) selon au moins l'une quelconque des revendications précédentes.

21. Installation de purification de gaz d'échappement (14), en particulier comprenant un filtre à particules (16), avec un élément filtrant (18) selon au moins l'une quelconque des revendications 1 à 19.

22. Procédé de fabrication d'un élément filtrant (18) selon au moins l'une quelconque des revendications 1 à 19, dans lequel différents segments filtrants (36-42, 60-62), qui présentent chacun au moins une quantité partielle de canaux d'écoulement (28, 30) de l'élément filtrant (18), sont reliés les uns aux autres par le biais d'un moyen de liaison (48), **caractérisé en ce que** les segments filtrants (36-42, 60-62) et le moyen de liaison (48) sont extrudés ensemble d'une seule pièce.
